# EUROPÄISCHE PATENTSCHRIFT

(11) **EP 2 079 917 B1**
(45) Veröffentlichungstag und Bekanntmachung des Hinweises auf die Patenterteilung: **21.11.2012**
(21) Anmeldenummer: 07820348.6
(22) Anmeldetag: 19.09.2007
(51) Int. Cl.: F02D 41/22

(54) **VERFAHREN UND VORRICHTUNG ZUR ÜBERWACHUNG EINER FUNKTIONSFÄHIGKEIT EINER MOTORSTEUERUNG EINES VERBRENNUNGSMOTORS**
METHOD AND DEVICE FOR MONITORING A FUNCTIONALITY OF AN ENGINE CONTROLLER OF AN INTERNAL COMBUSTION ENGINE
PROCÉDÉ ET DISPOSITIF DE SURVEILLANCE DU BON FONCTIONNEMENT DE LA COMMANDE D'UN MOTEUR À COMBUSTION INTERNE

(30) Priorität: 10.10.2006 DE 102006048169
(43) Veröffentlichungstag der Anmeldung: 22.07.2009
(73) Patentinhaber: Robert Bosch GmbH, 70442 Stuttgart (DE)
(72) Erfinder: MUELLER, Bernd, 70839 Gerlingen (DE); PITZAL, Volker, 73550 Waldstetten/wissgoldingen (DE); GMEHLICH, Rainer, 71254 Ditzingen (DE)
(86) Internationale Anmeldenummer: PCT/EP2007/059904
(87) Internationale Veröffentlichungsnummer: WO 2008/043650

(56) Entgegenhaltungen:
- DE-A1- 19 900 740
- DE-A1- 19 928 477
- DE-A1-102006 003 425
- US-A- 5 601 063
- US-B1- 6 305 347
- US-B1- 6 705 286

## Beschreibung

Die Erfindung betrifft ein Verfahren zur Überwachung einer Funktionsfähigkeit einer Steuerung, die auf einem System mit mehreren Ausführungseinheiten läuft.

Im Bereich eingebetteter Systeme, insbesondere in der Automobiltechnik oder in der Automatisierungstechnik, gibt es viele Anwendungen bzw. Anwendungsprogramme, bei denen ein Fehler in der Hardware potenziell sicherheitsrelevante Konsequenzen hat. Um diese Konsequenz zu vermeiden oder deren Auswirkungen zu verringern, werden daher Überwachungsmaßnahmen zur Detektion derartiger Fehler eingesetzt. Es gibt Anwendungen, in denen eine solche Überwachung nahezu permanent notwendig ist. In anderen Anwendungen werden Überwachungsfunktionen eingesetzt, die regelmäßig, beispielsweise periodisch, oder auf eine bestimmte Anforderung hin überprüfen, ob das Datenverarbeitungssystem oder sonstige Hardware-Komponenten noch korrekt funktionieren.

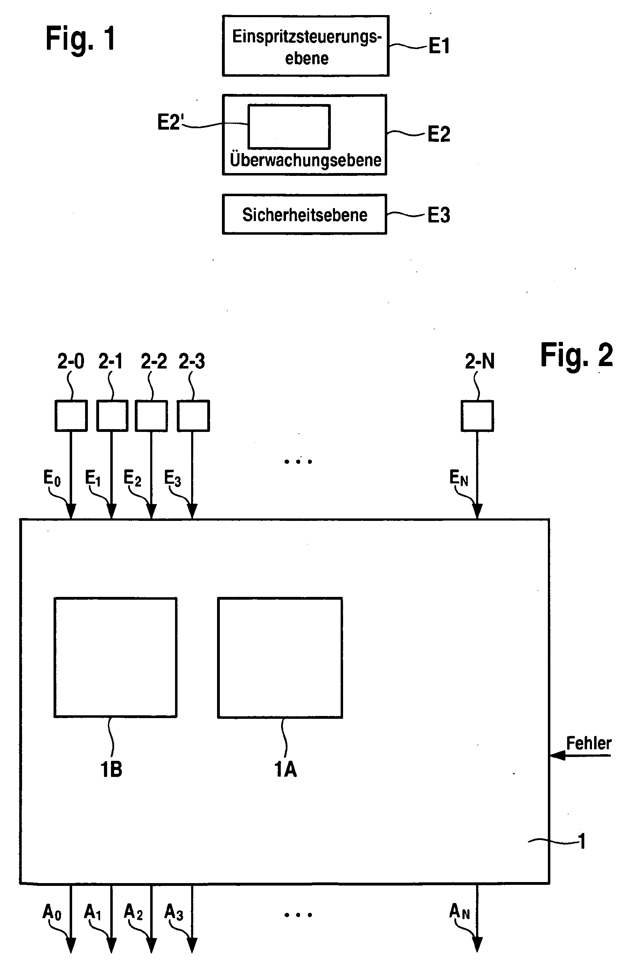

Figur 1 zeigt die Strukturierung eines herkömmlichen Überwachungsverfahrens im Motorsteuerungsbereich. Bei einer Motorsteuerung wird durch Einspritzsystem Kraftstoff in einen Verbrennungsraum eingespritzt. Aus Sicherheitssicht wird diese beispielhafte Anwendung im Motorsteuerungsbereich in drei Ebenen E1, E2, E3 strukturiert. Die Anwendungsprogramme der Einspritzsteuerung bilden eine Basis bzw. eine Grundebene E1, welche die eigentlich vorzunehmenden Funktionen beinhaltet. Die Einspritzsteuerung gibt an, wie viel Kraftstoff genau zu welchem Zeitpunkt in den Verbrennungsraum einzuspritzen ist. Bei einem Versagen der Einspritzsteuerung könnte der Fall auftreten, dass die Einspritzsteuerung zuviel bzw. ständig Kraftstoff in den Verbrennungsraum einspritzt, sodass das Kraftfahrzeug sehr stark beschleunigt und es zu einem Unfall kommen kann. Es wird daher bei einem herkömmlichen System eine Überwachungsebene E2 vorgesehen, die überwacht, ob die Einspritzsteuerung auf Ebene E1 fehlerfrei arbeitet. Die Überwachungsebene E2 wird durch zusätzliche Programme bzw. einen zusätzlichen Software-Code gebildet, der gegebenenfalls auf zusätzliche Sensoren zugreift. Bei einer herkömmlichen Motorsteuerung wird die Überwachungsebene E2 in der Regel durch eine kontinuierliche Momentenüberwachung gebildet,
in der überwacht wird, ob das aktuell durch den Motor erzeugte Kraftmoment nicht einen bestimmten Schwellenwert überschreitet. Bei einer herkömmlichen Motorsteuerung laufen die Programme der Einspritzsteuerungsebene E1 und der Überwachungsebene E2 auf der gleichen Hardware bzw. auf den gleichen Ausführungseinheiten ab. Da die Anwendungsprogramme der Einspritzsteuerung in Ebene E1 und die Anwendungsprogramme der Kraftmomentenüberwachung in Ebene E2 auf der gleichen Ausführungseinheit bzw. CPU laufen, kann ein Hardwarefehler in der Ausführungseinheit dazu führen, dass sowohl die Einspritzsteuerung als auch die Kraftmomentenüberwachung gleichzeitig ausfallen. Es wird daher aus Sicherheitsgründen bei herkömmlichen Motorsteuerungen eine weitere Sicherheitsebene E3 vorgesehen, welche ihrerseits überprüft, ob die Überwachungsebene E2 einwandfrei funktioniert. Die Sicherheitsebene E3 führt eine Frage-Antwort-Kommunikation der Ausführungseinheit mit einer externen Hardware-Komponente, beispielsweise einem ASIC durch, wobei grundsätzlich die Funktionsfähigkeit der Ausführungseinheit bzw. des Mikro-Controllers, insbesondere das Funktionieren der Anwendungsprogramme innerhalb der Überwachungsebene E2 überprüft wird. Die Anwendungsprogramme der Überwachungsebene E2 führen eine Plausibilitätsprüfung durch. Beispielsweise lesen die Überwachungsprogramme der Überwachungsebene E2 eine Winkelstellung α des Gaspedals ein. Überschreitet die von den Anwendungsprogrammen der Einspritzsteuerungsebene E1 angegebene Menge von Kraftstoff einen bestimmten Schwellenwert, der von der sensorisch überwachten Gaspedalstellung abhängt, erkennt das auf Ebene E2 laufende Überwachungsprogramm, dass ein Fehler in der Einspritzsteuerung aufgetreten ist und veranlasst in der Regel das Abschalten des Motors aus Sicherheitsgründen. Die Überwachungsebene E2 enthält beispielsweise zusätzlich ein Momentenüberwachungsprogramm, welches das auf dem Motor erzeugte Kraftmoment überwacht und bei Überschreiten eines Schwellenwertes den Motor deaktiviert. Zur Implementierung der Überwachungsfunktion wird der Code der Überwachungsprogramme dupliziert als E2' abgelegt. Dabei wird der Algorithmus bzw. das Programm von E2' mit Default-Daten bzw. Testdaten durchgerechnet. Das Programm der Sicherheitsebene E3, das beispielsweise auf einem ASIC, d. h. auf einer anwenderspezifisch integrierten Schaltung abläuft, legt ein bestimmtes Bit-Muster als Frage an die Ausführungseinheit bzw. CPU an, welche das in Kopie vorliegende Überwachungsprogramm gemäß Ebene E2' mit diesem Default-Wert durchrechnet und ein Antwort-Bit-Muster an das Sicherheitsprogramm der Ebene E3 in der anwenderspezifischen integrierten Schaltung ASIC abgibt. Das Sicherheitsprogramm vergleicht das Antwort-Bit-Muster mit einem Referenz-Bit-Muster, um festzustellen, ob das Überwachungsprogramm innerhalb der CPU noch fehlerfrei funktioniert. Das Sicherheitsprogramm innerhalb der anwenderspezifisch integrierten Schaltung läuft auf einer anderen Hardware, nämlich dem ASIC, ab als das Überwachungsprogramm, welches auf einer Ausführungseinheit bzw. CPU abläuft. Daher bildet diese herkömmliche Vorgehensweise eine gewisse Sicherheit gegenüber Hardware-Fehlern innerhalb der CPU.

Ein Nachteil des herkömmlichen Sicherheitskonzepts, wie es in Figur 1 dargestellt ist, besteht allerdings darin, dass die Überwachungsprogramme für den Befehlstest zum Durchrechnen mit Default- bzw. Testwerten in Kopie vorliegen müssen. Daher wird der Speicherplatz zum Ablegen der kopierten Programmbefehle auf der Überwachungsebene E2' benötigt.

Ein weiterer Nachteil des herkömmlichen Befehlstest, bei dem Default- bzw. Testdaten als Eingabedaten für die kopierten Überwachungsprogramme E2' dienen, besteht darin, dass Operanden-abhängige Fehler nicht detektiert werden. US6705286 offenbart ein Überwachungsverfahren eines Drehmoments eines Verbrennungsmotors.

Es ist daher die Aufgabe der vorliegenden Erfindung, ein Verfahren zur Überwachung der Funktionsfähigkeit einer Steuerung zu schaffen, das auch Operanden-abhängige Fehler detektiert.

Die Erfindung schafft ein Verfahren zur Überwachung der Funktionsfähigkeit einer Steuerung, die auf einem System mit mehreren Ausführungseinheiten läuft, wobei ein Überwachungsprogramm in einem Vergleichs-Betriebsmodus VM auf mehreren Ausführungseinheiten des Systems ausgeführt wird und wobei die bei der Ausführung des Überwachungsprogramms die von diesen Ausführungseinheiten abgegebenen Signale zur Erkennung eines Fehlers miteinander verglichen werden.

Ein Vorteil des erfindungsgemäßen Verfahrens besteht darin, dass kein Speicherplatz für kopierte Programmbefehle eines Überwachungsprogramms verschwendet wird.

Bei einer Ausführungsform des erfindungsgemäßen Verfahrens wird das Überwachungsprogramm durch ein Momentenüberwachungsprogramm gebildet, das ein durch einen Motor erzeugtes Moment überwacht.

Bei einer Ausführungsform des erfindungsgemäßen Verfahrens wird die Steuerung durch eine Motorsteuerung gebildet.

Bei einer Ausführungsform des erfindungsgemäßen Verfahrens wird das Überwachungsprogramm synchron auf den Ausführungseinheiten ausgeführt.

Bei einer alternativen Ausführungsform des erfindungsgemäßen Verfahrens wird das Überwachungsprogramm asynchron auf den Ausführungseinheiten ausgeführt.

Bei einer Ausführungsform des erfindungsgemäßen Verfahrens wird das System nach erfolgter Ausführung des Überwachungsprogramms in einen Performanz-Betriebsmodus umgeschaltet, in dem die Ausführungseinheiten unterschiedliche Programme ausführen.

Bei einer Ausführungsform des erfindungsgemäßen Verfahrens führen die in dem Performanz-Betriebsmodus ausgeführten Programme die Steuerung durch.

Bei einer Ausführungsform des erfindungsgemäßen Verfahrens wird das Überwachungsprogramm periodisch ausgeführt.

Bei einer Ausführungsform des erfindungsgemäßen Verfahrens wird ein Fehler bei der Ausführung des Überwachungsprogramms erkannt, wenn die von den Ausführungseinheiten bei der Ausführung des Überwachungsprogramms abgegebenen Signale voneinander abweichen.

Bei einer Ausführungsform des erfindungsgemäßen Verfahrens wird nach Erkennung eines Fehlers bei der Ausführung des Überwachungsprogramms eine durch die Steuerung gesteuerte Einheit abgeschaltet.

Die Erfindung schafft ferner eine Steuerung mit mehreren Ausführungseinheiten, wobei ein Überwachungsprogramm in einem Vergleichs-Betriebsmodus VM auf mehreren Ausführungseinheiten ausgeführt wird und die bei der Ausführung des Überwachungsprogramms von den Ausführungseinheiten abgegebenen Signale zur Erkennung eines Fehlers miteinander verglichen werden.

Bei einer Ausführungsform der erfindungsgemäßen Steuerung ist das Überwachungsprogramm ein Momentenüberwachungsprogramm, das ein durch einen Motor erzeugtes Moment überwacht.

Bei einer Ausführungsform der erfindungsgemäßen Steuerung ist die Steuerung eine Motorsteuerung.

Bei einer Ausführungsform der erfindungsgemäßen Steuerung werden die Ausführungseinheiten durch einen Mikroprozessor, einen Co-Prozessor, einen digitalen Signal-Prozessor DSP, eine Gleitpunktberechnungseinheit FPU oder durch eine arithmetisch logische Einheit ALU gebildet.

Im Weiteren werden bevorzugte Ausführungsformen des erfindungsgemäßen Verfahrens und der erfindungsgemäßen Steuerung unter Bezugnahme auf die beigefügten Figuren zur Erläuterung erfindungswesentlicher Merkmale beschrieben.

Es zeigen:
- Figur 1: ein Diagramm zur Darstellung eines herkömmlichen Sicherheitskonzepts mit drei Ebenen;
- Figur 2: ein Blockschaltbild einer bei dem erfindungsgemäßen Verfahren eingesetzten Umschalt- und Vergleichseinheit;
- Figur 3: ein Blockdiagramm zur Darstellung einer möglichen Ausführungsform der erfindungsgemäßen Steuerung;
- Figur 4: ein Ablaufdiagramm zur Erläuterung des erfindungsgemäßen Verfahrens;
- Figur 5: ein Zeitablaufdiagramm zur Erläuterung einer möglichen Ausführungsform des erfindungsgemäßen Verfahrens.

Wie man aus Figur 2 erkennen kann, ist eine Umschalt- und Vergleichsschaltung 1 eingangsseitig an N+1 Ausführungseinheiten 2 angeschlossen und erhält logische Eingangssignale E₀, E₁, E₂, E₃ ... E_{N} von den Ausführungseinheiten 2-i. Die Umschalt- und Vergleichseinheit 1 enthält eine Vergleichslogik 1A und eine Schaltlogik 1B.

Das in Figur 2 dargestellte System kann in mindestens zwei Betriebmodi betrieben werden. In einem ersten Betriebsmodus zur Leistungssteigerung, der auch als Performanz-Betriebsmodus PM bezeichnet wird, verarbeiten die Ausführungseinheiten 1-i bzw. Cores parallel unterschiedliche Programme bzw. Tasks. Bei den Ausführungseinheiten 2-i kann es sich um beliebige Ausführungseinheiten 2-i zur Ausführung einer Berechnungsanweisung, beispielsweise um einen Prozessor, eine Gleitpunktberechnungseinheit FPU, einen digitalen Signalprozessor DSP, einen Co-Prozessor oder um eine arithmetisch logische Berechnungseinheit ALU handeln. Die Abarbeitung der Programme durch die verschiedenen Ausführungseinheiten 2-i im Performanz-Modus PM kann synchron oder asynchron durchgeführt werden. Im Leistungsmodus erfolgt keine redundante Bearbeitung, sondern die Ausführungseinheiten 2-i führen verschiedene Berechnung bzw. Programme parallel durch. Im reinen Performanz-Betriebsmodus PM werden alle Eingangssignale Eᵢ auf entsprechende Ausgangssignale Aᵢ geschaltet bzw. geleitet.

Neben dem Einsatz eines superskalaren Berechnungssystems besteht der zweite Grund für eine Multi-Core-Architektur darin, die Sicherheit der Signalverarbeitung zu steigern, indem mehrere Ausführungseinheiten 2-i redundant das gleiche Programm abarbeiten. In diesem zweiten Betriebsmodus, der auch als Sicherheitsmodus bzw. Safety Mode oder Vergleichs-Betriebsmodus VM bezeichnet wird, werden die Ergebnisse bzw. logischen Ausgangssignale der Ausführungseinheiten durch die Umschalt- und Vergleichsschaltung 1 miteinander verglichen, sodass ein aufgetretener Fehler bzw. eine Signalabweichung durch einen Vergleich auf Übereinstimmung erkannt werden kann. Im reinen Vergleichs-Betriebsmodus VM werden daher alle Eingangssignale Eᵢ auf nur genau ein einziges Ausgangssignal Aᵢ geleitet bzw. abgebildet. Mischformen sind möglich. In der konfigurierbaren Schaltlogik 1B wird angegeben, wie viele Ausgangsanschlüsse bzw. Ausgangssignale Aᵢ vorgesehen sind. Weiterhin wird in der Schaltlogik 1B abgelegt, welche Eingangssignale Eᵢ zu welchem der Ausgangssignale Aᵢ beitragen. In der Schaltlogik 1B ist somit eine Abbildungsfunktion abgelegt, die Eingangssignale Eᵢ verschiedenen Ausgangssignalen Aᵢ zuordnen.

Die Verarbeitungslogik 1A legt bei jedem Ausgangssignal Aᵢ fest, in welcher Form die Eingangssignale zu dem jeweiligen Ausgangssignal beitragen. Beispielsweise wird das Ausgangssignal A₀ durch die Eingangssignale E₁, ..., E_{N} erzeugt. Für m=1 entspricht dies einfach einer Durchschaltung eines Eingangssignals. Für M=2 werden zwei Eingangssignale E₁, E₂ miteinander verglichen. Dieser Vergleich kann synchron oder asynchron durch die Schaltung 1 durchgeführt werden. Dabei kann der Vergleich bitweise erfolgen oder alternativ werden nur signifikante Bits miteinander verglichen. Bei M≥3 bestehen verschiedene Möglichkeiten. Eine erste Möglichkeit besteht darin, dass alle Signale miteinander verglichen werden und bei Vorhandensein mindestens zweier verschiedener Werte ein Fehler detektiert wird, der optional durch die Umschalt- und Vergleichsschaltung 1 signalisiert wird. Eine weitere Möglichkeit besteht darin, dass eine K aus m-Auswahl vorgenommen wird, wobei K>M/2 ist. Dies wird bei einer Ausführungsform durch das Vorsehen von Vergleichern bzw. Komparatoren realisiert. Dabei wird optional ein erstes Fehlersignal generiert, wenn eines der Eingangssignale als abweichend von den anderen Eingangssignalen erkannt wird. Bei einem von dem ersten Fehlersignal verschiedenen zweiten Fehlersignal können alle drei Eingangssignale voneinander abweichen. Bei einer weiteren Ausführungsform werden die Eingangssignalwerte einer weiteren Berechnungseinheit zugeführt, die beispielsweise einen Mittelwert oder einen Medianwert berechnet bzw. einen fehlertoleranten Algorithmus FTA durchführt. Bei einem fehlertoleranten Algorithmus werden die Extremwerte der Eingangssignalwerte gestrichen bzw. ignoriert und eine Mittlung über die restlichen Signalwerte vorgenommen. Bei einer Ausführungsform erfolgt die Mittlung über die gesamte Menge der restlichen Signalwerte. Bei einer alternativen Ausführungsform erfolgt eine Mittelung über eine in der Hardware leicht zu bildende Teilmenge der verbleibenden Signalwerte. Während bei der Mittelwertbildung lediglich eine Addition und eine Division vorgenommen werden müssen, erfordern FTM, FTA oder die Medianwertbildung teilweise eine Sortierung der Eingangssignalwerte. Bei einer Ausführungsform wird bei hinreichend großen Signalabweichungen bzw. Extremwerten optional ein Fehlersignal ausgegeben bzw. angezeigt. Die verschiedenen genannten Möglichkeiten zur Signalverarbeitung zu einem Signal stellen Vergleichsoperationen dar. Die Verarbeitungslogik 1A legt die genaue Gestaltung der vorzunehmenden Vergleichsoperation für jedes Ausgangssignal Aᵢ und somit auch für die Eingangssignale Eᵢ fest. Die Kombination der Informationen innerhalb der Schaltlogik 1B, d. h. die Zuordnungsfunktion der in der Verarbeitungslogik 1A angegebenen Vergleichsoperation pro Ausgangssignal bzw. pro Funktionswert stellt eine Betriebsmodusinformation dar und legt den Betriebsmodus fest. Diese Information ist in der Regel mehrwertig und wird durch mehr als ein logisches Bit dargestellt. Für den Fall, dass nur zwei Ausführungseinheiten 2-i vorgesehen ist und somit nur ein Vergleichsmodus existiert, kann die gesamte Information in dem Betriebsmodus auf ein einziges logisches Bit kompensiert werden.

Eine Umschaltung des Systems von dem Performanz-Betriebsmodus PM in einen Vergleichs-Betriebsmodus VM erfolgt im Allgemeinen dadurch, dass die Ausführungseinheiten 2-i, die in dem Performanz-Betriebsmodus PM auf verschiedene Signalausgänge abgebildet bzw. durchgeschaltet sind, in dem Vergleichsbetriebsmodus VM auf den gleichen Signalausgang abgebildet bzw. durchgeschaltet werden. Vorzugsweise wird dies dadurch realisiert, dass eine Teilmenge von Ausführungseinheiten 2-i vorgesehen werden, bei denen im Performanz-Betriebsmodus PM alle Eingangssignale Eᵢ, die in der Teilmenge zu berücksichtigen sind, direkt auf korrespondierende Ausgangssignale Aᵢ geschaltet werden, während die Eingangssignale in dem Vergleichsmodus VM alle auf einen einzigen Signalausgang abgebildet bzw. an diesen durchgeschaltet werden. Alternativ kann eine Umschaltung dadurch realisiert werden, dass Paarungen geändert werden.

Zwischen den verschiedenen Betriebsmodi kann, über die Software gesteuert, dynamisch im laufenden Betrieb umgeschaltet werden. Ausgelöst wird die Umschaltung bei einer Ausführungsform über die Ausführung von speziellen Umschaltbefehlen bzw. Umschaltinstruktionen, speziellen Instruktionssequenzen, explizit gekennzeichneten Instruktionen oder durch den Zugriff auf bestimmte Adressen durch mindestens eine der Ausführungseinheiten 2-i des Systems.

Die Umschaltung zwischen dem Sicherheitsmodus VM, in dem eine redundante Abarbeitung und Prüfung erfolgt und den Leistungs- bzw. Performanz-Betriebsmodus PM, bei dem eine Leistungssteigerung durch separate Programmabarbeitung erreicht wird, erfolgt durch die Umschalteinrichtung 1. Bei einer Ausführungsform erfolgen zur Umschaltung eine Kennzeichnung der Programme, Anwendungsprogramme, Programmteile oder auch der Programmbefehle durch eine Kennung, durch welche erkennbar ist, ob diese Programmbefehle sicherheitsrelevant sind, d. h. in dem Sicherheitsbetriebsmodus bzw. Vergleichs-Betriebsmodus VM abgearbeitet werden müssen, oder dem Leistungs- bzw. Performanz-Betriebsmodus PM zugänglich gemacht werden können. Die Kennzeichnung kann durch ein Bit in dem Programmbefehl erfolgen. Alternativ kann durch einen speziellen Programmbefehl die darauf folgende Sequenz gekennzeichnet werden.

Im Sicherheitsbetriebsmodus bzw. Safety Mode VM dauert die Berechnung der Ergebnisse bzw. Ausgangssignale der Ausführungseinheiten 2-i bei synchroner Abarbeitung auf den verschiedenen Ausführungseinheiten 2-i gleich lang. Die Ergebnisse stehen dann im Sicherheitsbetriebsmodus VM bei synchroner Abarbeitung der Umschalteinrichtung 1 gleichzeitig zur Verfügung. Stimmen die Ergebnisse überein, so werden die entsprechenden Daten freigegeben. Bei einer Signalabweichung erfolgt eine vorgegebene Fehlerreaktion.

Befindet sich das System im Performanz-Betriebsmodus PM, werden die Programme parallel abgearbeitet und Komparatoren bzw. Vergleiche innerhalb der Umschalt- und Vergleichsschaltung 1 werden nicht angesteuert.

Bei dem erfindungsgemäßen Verfahren zur Überwachung der Funktionsfähigkeit einer Steuerung, die auf einem System mit mehreren Ausführungseinheiten 2 läuft, wird mindestens ein Überwachungsprogramm in einem Vergleichs-Betriebsmodus VM auf mehreren oder sogar auf allen Ausführungseinheiten des Systems ausgeführt. Die bei der Ausführung des Überwachungsprogramms von diesen Ausführungseinheiten 2 abgegebenen Signale werden zur Erkennung eines Fehlers miteinander verglichen. Bei einer bevorzugten Ausführungsform der erfindungsgemäßen Steuerung weist diese mindestens drei Ausführungseinheiten 2 auf. Dasjenige Signal, das von den übrigen Signalen die größte Signalabweichung aufweist, wird beispielsweise anhand einer Mehrheitsentscheidung als fehlerhaft erkannt Bei den Signalen handelt es sich bei einer Ausführungsform um digitale logische Signale, insbesondere um binäre Signale. Bei der erfindungsgemäßen Steuerung 4 handelt es sich bei einer bevorzugten Ausführungsform um eine Motorsteuerung zur Steuerung eines Verbrennungsmotors. Bei alternativen Ausführungsformen handelt es sich bei der Steuerung 4 um eine Steuerung zur Ansteuerung eines Elektromotors. Das Überwachungsprogramm wird beispielsweise durch ein Momentenüberwachungsprogramm gebildet, welches ein durch den Verbrennungs- oder Elektromotor erzeugtes Kraftmoment überwacht. Dabei kann das Überwachungsprogramm synchron oder asynchron auf den Ausführungseinheiten 2 ausgeführt werden.

Bei dem erfindungsgemäßen Verfahren werden die normalen Anwendungsprogramme zur Motorsteuerung in dem Performanz-Betriebsmodus PM ausgeführt, d. h. jede Ausführungseinheit 2 des Systems führt zur Leistungssteigerung ein Programm zur Steuerung durch, während die anderen Ausführungseinheiten 2 ihrerseits ein davon unterschiedliches Anwendungsprogramm ausführen. Das auf Ebene E2 laufende Überwachungsprogramm wird bei einer möglichen Ausführungsform des erfindungsgemäßen Verfahrens periodisch aufgerufen. Bei dem erfindungsgemäßen Verfahren wird das Überwachungsprogramm in einem Vergleichs-Betriebsmodus VM auf mehreren Ausführungseinheiten 2 des Systems ausgeführt. Im Vergleichs-Betriebsmodus VM führen mehrere bzw. alle Ausführungseinheiten 2 des Systems das gleiche Überwachungsprogramm aus, wobei die dabei erzeugten Ausgangssignale zur Erkennung eines Fehlers miteinander verglichen werden. Bei einer möglichen Ausführungsform werden mehrere Überwachungsprogramme auf der Ebene E2 ausgeführt, die beispielsweise alle periodisch aufgerufen werden. Alle aufgerufenen Überwachungsprogramme werden im Vergleichs-Betriebsmodus VM ausgeführt. Bei einer alternativen Ausführungsform werden die Überwachungsprogramme auf eine bestimmte Anforderung bzw. einen Anforderungsbefehl hin aufgerufen und anschließend im Vergleichs-Betriebsmodus VM von mehreren bzw. mindestens zwei Ausführungseinheiten 2 des Systems ausgeführt. Ein derartiger Anforderungsbefehl zur Ausführung des Überwachungsprogramms kann beispielsweise durch einen Interrupt ausgelöst werden.

Nach erfolgter Ausführung des Überwachungsprogramms wird das System zurück in einen Performanz-Betriebsmodus PM umgeschaltet, in dem die Ausführungseinheiten 2 vorzugsweise unterschiedliche Programme der ersten Ebene E1, beispielsweise Steuerungsprogramme, ausführen.

Bei einer Ausführungsform des erfindungsgemäßen Verfahrens wird ein Fehler bei der Ausführung des Überwachungsprogramms in der Ebene E2 erkannt, wenn die von den Ausführungseinheiten 2 bei der Ausführung des Überwachungsprogramms im Vergleichs-Betriebsmodus VM abgegebenen Signale voneinander abweichen. Dabei wird vorzugsweise nach Erkennen eines Fehlers bei der Ausführung des Überwachungsprogramms eine durch die Steuerung 4 gesteuerte Einheit 5, beispielsweise ein Motor, abgeschaltet.

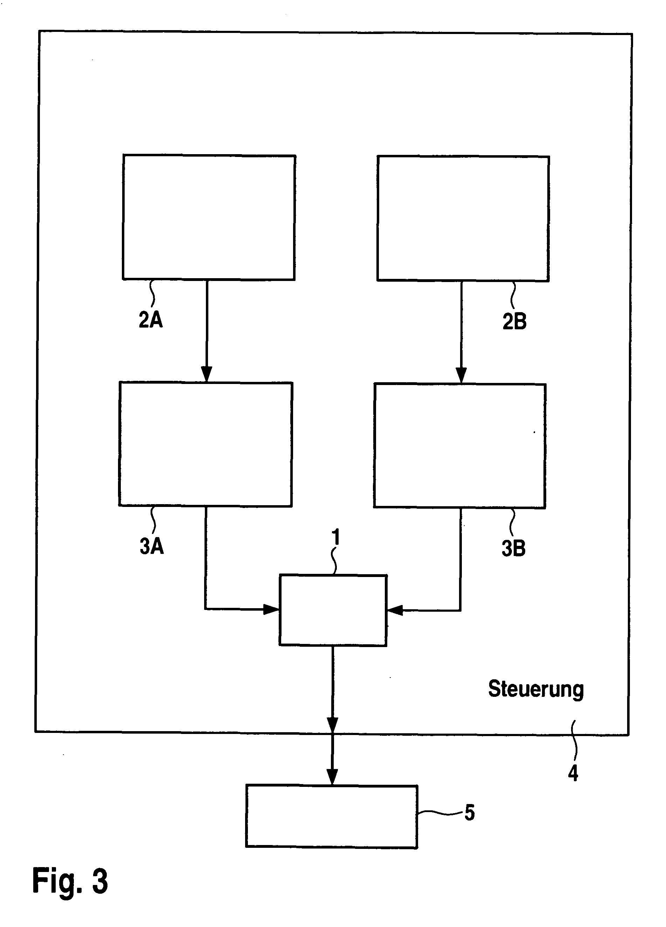

Figur 3 zeigt ein Blockschaltbild einer möglichen Ausführungsform des erfindungsgemäßen Steuerungssystems. Bei der in Figur 3 dargestellten Ausführungsform weist die erfindungsgemäße Steuerung 4 zwei Ausführungseinheiten 2A, 2B auf. Bei den Ausführungseinheiten 2A, 2B kann es sich um vollständige Mikroprozessoren bzw. CPU, um Co-Prozessoren, digitale Signalprozessoren DSP, Gleitpunktberechnungseinheiten FPU oder um eine arithmetisch logische Einheit ALU handeln. Bei weiteren Ausführungsformen der erfindungsgemäßen Steuerung 4 sind mehr als zwei Ausführungseinheiten 2 vorgesehen. Bei der in Figur 3 dargestellten einfachen Ausführungsform werden die von den Ausführungseinheiten 2A, 2B erzeugten Signale jeweils in einem Zwischenspeicher 3A, 3B zwischengespeichert. Jede Ausführungseinheit 2 weist vorzugsweise ausgangsseitig einen eignen Zwischenspeicher 3 auf. Die zwischengespeicherten Ergebnisse bzw. Ausgangssignale der Ausführungseinheiten 2A, 2B werden einer Vergleichseinheit 1 zugeführt. Die Vergleichseinheit 4 kann beispielsweise durch die Umschalt- und Vergleichsschaltung 1, wie sie in Figur 2 dargestellt ist, gebildet werden. Der Vergleich der zwischengespeicherten Ausgangssignale können durch Ablauf eines entsprechenden Vergleichsprogramms und -Software oder fest verdrahtet in Hardware durchgeführt werden.

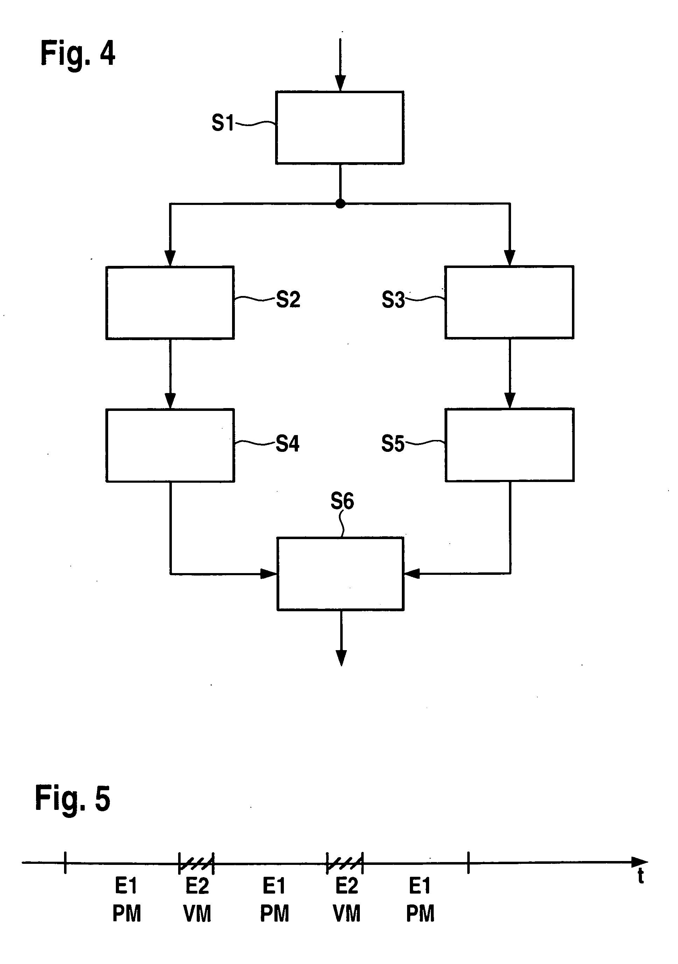

Figur 4 zeigt ein Ablaufdiagramm einer möglichen Ausführungsform des erfindungsgemäßen Verfahrens zur Überwachung der Funktionsfähigkeit einer Steuerung.

Nach Aufruf des Überwachungsprogramms in der zweiten Ebene E2 erfolgt im Schritt S1 eine Umschaltung des Systems von dem Performanz-Betriebsmodus PM in den Vergleichs-Betriebsmodus VM. Anschließend werden die beiden Ausführungseinheiten 2A, 2B, wie sie in Figur 3 dargestellt sind, zur Ausführung des gleichen Überwachungsprogramms in den Schritten S2, S3 aktiviert und führen das gleiche Überwachungsprogramm, beispielsweise ein Kraftmomentenüberwachungsprogramm, aus. Bei der in Figur 4 dargestellten Ausführungsform berechnen die beiden Ausführungseinheiten 2A, 2B asynchron in den Schritten S2, S3 ein entsprechendes Ergebnissignal, welches in den Schritten S4, S5 in den jeweiligen Zwischenspeichern 3A, 3B zwischengespeichert wird. Bei einer alternativen Ausführungsform berechnen die beiden Ausführungseinheiten 2A, 2B in den Schritten S2, S3 das jeweilige Ausgangssignal bzw. den Ergebniswert synchron zueinander. Nach Vorliegen der beiden Ergebniswerte bzw. Ausgangssignale wird im Schritt S6 vorzugsweise durch die Umschalt- und Vergleichsschaltung 1 ein Vergleich zwischen beiden Ausgangssignalen durchgeführt. Weichen die beiden Signale voneinander ab, wird ein Fehler erkannt und es erfolgt anschließend eine entsprechende Fehlerbehandlung. Bei einer sicherheitsrelevanten Anwendung wird eine durch die Steuerung 4 angesteuerte Einheit 5, beispielsweise ein Motor, abgeschaltet. Der Vergleich in Schritt S6 kann entweder durch eine entsprechende Vergleichsoperation per Software nach anschließendem Auslesen des Zwischenspeichers 3A, 3B durchgeführt werden oder bei einer alternativen Ausführungsform erfolgt der Vergleich durch eine fest verdrahtete Schaltung.

Figur 5 zeigt ein Zeitablaufdiagramm zur Erläuterung einer möglichen Ausführungsform des erfindungsgemäßen Verfahrens. Bei dieser Ausführungsform wird das Überwachungsprogramm in Ebene E2 periodisch aufgerufen und im Vergleichs-Betriebsmodus VM durch mehrere Ausführungseinheiten 2 gleichzeitig ausgeführt. Nach Ausführung des Überwachungsprogramms kehrt das System in dem Performanz-Betriebsmodus PM zurück und führt in der Ebene E1 die eigentlichen Steuerungsprogramme durch.

Bei einer alternativen Ausführungsform der erfindungsgemäßen Steuerung 4 arbeitet die Steuerung 4 stets im Performanz-Betriebsmodus PM, wobei Überwachungsprogramme mit mindestens zwei Ausführungseinheiten 2 asynchron berechnet werden. Die von den Ausführungseinheiten dabei ausgegebenen Ergebnisse bzw. Ausgangssignale werden dabei zur Fehlererkennung miteinander verglichen. Bei dieser Ausführungsform müssen allerdings die Ergebnisse jeweils zwischengespeichert werden und die Ergebnisse werden anschließend zweimal miteinander verglichen, nämlich einmal auf der ersten Ausführungseinheit 2A und auf der zweiten Ausführungseinheit 2B, um etwaige Hardware-Fehler der beiden Ausführungseinheiten 2 zu berücksichtigen. Daher ist diese Ausführungsform aufwändiger, als eine Ausführungsform, bei der das Überwachungsprogramm im Vergleichs-Betriebsmodus VM ausgeführt wird.

Das erfindungsgemäß Verfahren erlaubt auch die Detektion von Operanden-abhängigen Fehlern. Darüber hinaus führt das erfindungsgemäße Verfahren zu einer deutlichen Einsparung des Speicherplatzes im Vergleich zu dem herkömmlichen in Figur 1 dargestellten Sicherheitskonzept.

Bei einer möglichen Ausführungsform der erfindungsgemäßen Steuerung 4 weist diese mindestens drei Ausführungseinheiten 2 auf, wobei mittels einer Mehrheitsentscheidung bei einer Signalabweichung festgestellt werden kann, welche Ausführungseinheit 2 vermutlich fehlerhaft arbeitet Diese Ausführungseinheit 2 führt anschließend vorzugsweise einen Selbsttest aus, um festzustellen, ob diese Ausführungseinheit 2 tatsächlich ausgefallen ist Bei einer Ausführungsform wird die Ausführungseinheit 2 deaktiviert, wenn der Selbsttest ergibt, dass die Ausführungseinheit 2 tatsächlich ausgefallen ist. Bei dieser Ausführungsform arbeitet das System somit sogar fehlertolerant.

Zur Absicherung gegen permanente Fehler in beiden Cores bzw. Ausführungseinheiten 2, wie sie beispielsweise durch einen Fertigungsfehler entstehen, erfolgt bei einer möglichen Ausführungsform des erfindungsgemäßen Verfahrens jeweils ein Selbsttest der Ausführungseinheiten 2.

Bei einer möglichen Ausführungsform des erfindungsgemäßen Verfahrens erfolgt die Ausführung von Überwachungsprogrammen in der Ebene E2 im Vergleichs-Betriebsmodus VM, wobei zusätzlich zur weiteren Absicherung eine Sicherheitsebene E3 vorgesehen ist, die weiterhin einen Befehlstest zur Überwachung der Funktionsfähigkeit der Überwachungsprogramme ausführt. Eine derartige Ausführungsform ist bei besonders sicherheitskritischen Anwendungen möglich.

## Patentansprüche

1. Verfahren zur Überwachung der Funktionsfähigkeit einer Steuerung eines Motors, die auf einem System mit mehreren Ausführungseinheiten (2) läuft, wobei die Ausführungseinheiten (2) durch eine CPU, einen Co-Prozessor, einen digitalen Signalprozessor DSP, eine Gleitpunktberechnungseinheit FPU oder durch eine arithmetisch logische Einheit ALU gebildet werden,
wobei ein gleiches Überwachungsprogramm durch ein MomentenÜberwachungsprogramm gebildet wird, das ein durch den Motor erzeugtes Moment überwacht, wobei das Überwachungsprogramm in einem Vergleichs-Betriebsmodus (VM) auf mehreren Ausführungseinheiten (2) des Systems redundant ausgeführt wird und wobei die bei der Ausführung des Überwachungsprogramms von diesen Ausführungseinheiten (2) abgegebenen Signale zur Erkennung eines Fehlers miteinander verglichen werden, wobei das System nach erfolgter Ausführung des Übervuachungsprogramms in einem Performanz-Betriebsmodus (PM) umgeschaltet wird, in dem die Ausführungseinheiten (2) unterschiedliche Programme ausführen, wobei die in dem Performana-Betriebsmodus (PM) ausgeführten Programme die Steuerung des Motors durchführen.

2. Verfahren nach Anspruch 1,
wobei das Überwachungsprogramm synchron auf den Ausführungseinheiten (2) ausgeführt wird.

3. Verfahren nach Anspruch 1,
wobei das Überwachungsprogramm asynchron auf den Ausführungseinheiten (2) ausgeführt wird.

4. Verfahren nach Anspruch 1,
wobei das Überwachungsprogramm periodisch ausgeführt wird.

5. Verfahren nach Anspruch 1,
wobei ein Fehler bei der Ausführung des Überwachungsprogramms erkannt wird, wenn die von den Ausführungseinheiten (2) bei der Ausführung des Überwachungsprogramms abgegebenen Signale voneinander abweichen.

6. Verfahren nach Anspruch 5,
wobei nach Erkennen eines Fehlers bei der Ausführung des Überwachungsprogramms eine durch die Steuerung (4) gesteuerte Einheit (5) abgeschaltet wird.

7. Steuerung (4) zur Steuerung eines Motors mit mehreren Ausführungseinheiten, wobei die Ausführungseinheiten (2) durch eine CPU, einen Co-Prozessor, einen digitalen Signalprozessor DSP, eine Gleitpunktberechnungseinheit FPU oder durch eine arithmetisch logische Einheit ALU gebildet werden,
wobei ein gleiches Überwachungsprogramm durch ein MomentenÜberwachungsprogramm gebildet wird, das ein durch den Motor erzeugtes Moment überwacht, wobei das Überwachungsprogramm in einem Vergleichs-Betriebsmodus (VM) auf mehreren Ausführungseinheiten (2) redundant ausgeführt wird und die bei der Ausführung des Überwachungsprogramms von den Ausführungseinheiten (2) abgegebenen Signale zur Erkennung eines Fehlers miteinander verglichen werden, wobei das System nach erfolgter Ausführung des Überwachungsprogramms in einem Performanz-Betriebsmodus (PM) umgeschaltet wird, in dem die Ausführungseinheiten (2) unterschiedliche Programme ausführen, wobei die in dem Performanz-Betriebsmodus (PM) ausgeführten Programme die Steuerung des Motors durchführen.

## Claims

1. Method for monitoring the functionality of an engine controller which runs on a system having a plurality of execution units (2), the execution units (2) being formed by a CPU, a coprocessor, a digital signal processor DSP, a floating-point calculation unit FPU or an arithmetic logic unit ALU,
an identical monitoring program being formed by a torque monitoring program which monitors a torque produced by the engine, the monitoring program being redundantly executed in a plurality of execution units (2) of the system in a comparison operating mode (VM), and the signals emitted by these execution units (2) during the execution of the monitoring program being compared with one another in order to detect an error, the system being changed over, after the monitoring program has been executed, to a performance operating mode (PM) in which the execution units (2) execute different programs, the programs executed in the performance operating mode (PM) controlling the engine.

2. Method according to Claim 1,
the monitoring program being synchronously executed in the execution units (2).

3. Method according to Claim 1,
the monitoring program being asynchronously executed in the execution units (2).

4. Method according to Claim 1,
the monitoring program being periodically executed.

5. Method according to Claim 1,
an error being detected during the execution of the monitoring program if the signals emitted by the execution units (2) during the execution of the monitoring program differ from one another.

6. Method according to Claim 5,
a unit (5) controlled by the controller (4) being switched off after an error has been detected during the execution of the monitoring program.

7. Controller (4) for controlling an engine, having a plurality of execution units, the execution units (2) being formed by a CPU, a coprocessor, a digital signal processor DSP, a floating-point calculation unit FPU or an arithmetic logic unit ALU,
an identical monitoring program being formed by a torque monitoring program which monitors a torque produced by the engine, the monitoring program being redundantly executed in a plurality of execution units (2) in a comparison operating mode (VM), and the signals emitted by the execution units (2) during the execution of the monitoring program being compared with one another in order to detect an error, the system being changed over, after the monitoring program has been executed, to a performance operating mode (PM) in which the execution units (2) execute different programs, the programs executed in the performance operating mode (PM) controlling the engine.

## Revendications

1. Procédé de surveillance de l'aptitude au fonctionnement d'une commande d'un moteur qui est mise en oeuvre sur un système comportant une pluralité d'unités d'exécution (2), dans lequel les unités d'exécution (2) sont constituées d'une CPU (unité centrale), d'un coprocesseur, d'un processeur numérique de signaux DSP, d'une unité de calcul en virgule flottante FPU ou d'une unité arithmétique et logique ALU,
dans lequel un programme de surveillance identique est constitué d'un programme de surveillance du couple qui surveille le couple généré par le moteur, dans lequel le programme de surveillance est exécuté de manière redondante dans un mode de fonctionnement de comparaison (VM) sur une pluralité d'unités d'exécution (2) du système et dans lequel les signaux délivrés lors de l'exécution du programme de surveillance par ces unités d'exécution (2) sont comparés les uns aux autres pour détecter une erreur, dans lequel le système est amené à passer dans un mode de fonctionnement à hautes performances (PM) une fois que l'exécution du programme de surveillance a été effectuée, en faisant en sorte que les unités d'exécution (2) exécutent des programmes différents, les programmes exécutés dans le mode de fonctionnement à hautes performances (PM) mettant en oeuvre la commande du moteur.

2. Procédé selon la revendication 1, dans lequel le programme de surveillance est exécuté de manière synchrone sur les unités d'exécution (2).

3. Procédé selon la revendication 1, dans lequel le programme de surveillance est exécuté de manière asynchrone sur les unités d'exécution (2).

4. Procédé selon la revendication 1, dans lequel le programme de surveillance est exécuté de manière périodique.

5. Procédé selon la revendication 1, dans lequel une erreur est détectée lors de l'exécution du programme de surveillance lorsque les signaux délivrés par les unités d'exécution (2) lors de l'exécution du programme de surveillance s'écartent les uns des autres.

6. Procédé selon la revendication 5, dans lequel, après la détection d'une erreur lors de l'exécution du programme de surveillance, une unité commandée (5) est désactivée par la commande (4).

7. Commande (4) destinée à commander un moteur comportant une pluralité d'unités d'exécution (2), dans laquelle les unités d'exécution (2) sont constituées d'une CPU (unité centrale), d'un coprocesseur, d'un processeur numérique de signaux DSP, d'une unité de calcul en virgule flottante FPU ou d'une unité arithmétique et logique ALU,
dans laquelle un programme d'exécution identique est constitué d'un programme de surveillance du couple qui surveille un couple généré par le moteur, dans laquelle le programme de surveillance, dans un mode de fonctionnement de comparaison (VM) est exécuté de manière redondante sur une pluralité d'unités d'exécution (2), dans laquelle les signaux délivrés lors de l'exécution du programme de surveillance par les unités d'exécution (2) sont comparés les uns aux autres pour détecter une erreur, dans laquelle le système est amené à passer dans un mode de fonctionnement à hautes performances (PM) une fois que l'exécution du programme de surveillance a été effectuée, en faisant en sorte que les unités d'exécution (2) exécutent des programmes différents, les programmes exécutés dans le mode de fonctionnement à hautes performances (PM) mettant en oeuvre la commande du moteur.
